# EUROPEAN PATENT SPECIFICATION

(11) **EP 2 030 827 B1**
(45) Date of publication and mention of the grant of the patent: **27.10.2010**
(21) Application number: 08162431.4
(22) Date of filing: 14.08.2008
(51) Int. Cl.: B60K 15/04, B60K 15/05

(54) **A Fuel Filler Closure Device for a Vehicle**
Abschlussvorrichtung zum Kraftstoffeinfüllen für ein Fahrzeug
Dispositif de fermeture de remplissage de carburant pour véhicule

(30) Priority: 27.08.2007 US 845266
(43) Date of publication of application: 04.03.2009
(73) Proprietor: Ford Global Technologies, LLC, Dearborn, MI 48126 (US)
(72) Inventor: Aitken, Brian, Livonia, MI 48152 (US); Beier, Robert, Plymouth, MI 48170 (US)
(74) Representative: Messulam, Adam Clive

(56) References cited:
- EP-A- 1 415 844
- WO-A-2005/025914
- US-B1- 6 968 874

## Description

The present invention relates to fuel filler closure devices for motor vehicle and in particular to a fuel filler pipe closure device which dispenses with the need for a separate cap to be removed by a motorist prior to refuelling a vehicle.

Capless fuel filler devices have been used in the automotive business for several years. With typical capless fill systems, the fuel nozzle pushes aside a spring-loaded door as the nozzle is inserted into the filler. This obviates the need for a motorist to open or close a fuel cap in a separate operation.
WO 2005/025914 discloses a fuel filler closure device according to the preamble of claim 1.
Unfortunately, known capless fuel filler devices suffer from a disadvantage inasmuch as a dead volume existing in the filler device above the sealing door may become contaminated with road splash, dust or other unwanted material, which can fall into the filler pipe when a filler nozzle is inserted.

Another drawback of certain known capless devices resides in their inability to provide locking protection to prevent theft of fuel or tampering with a vehicle.

It is an object of this invention to provide a capless fuel filler system which minimizes contamination of both the fuel and the capless seal itself, while providing an opportunity to lock the filler device with an integral structure, so as to prevent unauthorized opening of the fill path.

According to the invention there is provided fuel filler closure device for an automotive vehicle, comprising a valve body for mounting to a fuel filler pipe connected to a fuel tank, the valve body having a filler passage, an access door mounted within the valve body having an open position allowing placement of a fuel nozzle within the filler passage and a closed position for blocking insertion of a filler nozzle and a locking mechanism for selectively permitting the access door to move from the closed position to the open position, **characterised in that** the fuel filler closure device further comprises a normally-closed, sealed door slideably mounted within the valve body in a position underlying the access door for preventing fuel vapour from leaving the filler closure device wherein, when the locking mechanism selectively permits the access door to move from the closed position to the open position, the sealed door is arranged to be opened by the insertion of a fuel filler nozzle thereby permitting filling of the fuel tank.

The valve body may be generally cylindrical.

The access door may be a primary access door cooperating with a sealing system to prevent fuel vapour from leaving the filler closure device when the primary access door is in the closed position.

Alternatively, the access door may be unsealed.

The locking mechanism may be operable to lock and unlock the access door in response to the presence of at least one vehicle condition.

The at least one vehicle condition may be one of the action of a motorist and a command issued by a passive trigger.

The passive trigger may be an electronic key fob having a radio frequency identification device.

The locking mechanism may include a lockable plunger.

The lockable plunger may be locked and unlocked in response to a condition activated by a motorist.

The locking mechanism may include a manually lockable plunger.

Alternatively, the locking mechanism may include a remotely lockable plunger.

The lockable plunger may be a remotely lockable plunger and the remotely lockable plunger is locked and unlocked in response to an electronic device.

The remotely lockable plunger may be locked and unlocked in response to a condition activated by a motorist.

The remotely lockable plunger may be locked and unlocked in response to an electronic device.

The electronic device may be an electronic key fob.

The electronic device may be a refuelling station.

The access door may be pivotably mounted to the valve body.

It is an advantage of a fuel filler closure device according to the present invention that contamination of the fuel system and, ultimately, the fuel contained therein, is mitigated because of the presence of a primary access door mounted within the device's valve body proximate an outer surface of the valve body.

It is a further advantage of a fuel filler closure device according to the present invention that the device, although having a capless operating principle, is nevertheless lockable to prevent unauthorized access to the fuel system.

It is yet another advantage of a fuel filler closure device according to the present invention that locking and unlocking may be accomplished in a passive manner with the use of an electronic key fob or other electronic device.

The invention will now be described by way of example with reference to the accompanying drawing of which:-
Figure 1 is a perspective view of a fuel filler pipe having a closure device according to the present invention;
Figure 2 is a plan view of an outboard surface of the filler pipe closure device shown in Figure 1 with both a primary access door and an underlying sealed door in closed positions;
Figure 3 is a cross-sectional view of the filler pipe and closure device of Figures 1 and 2, taken along the line 3-3 on Figure 2;
Figure 4 is similar to Figure 2 but showing only the primary access door in an open position;
Figure 5 is similar to Figures 2 and 4 but showing both the primary access door and the sealed door in their respective open positions;
Figure 6 illustrates a remotely controlled lock for a primary access door; and
Figure 7 is a schematic representation of a control device.

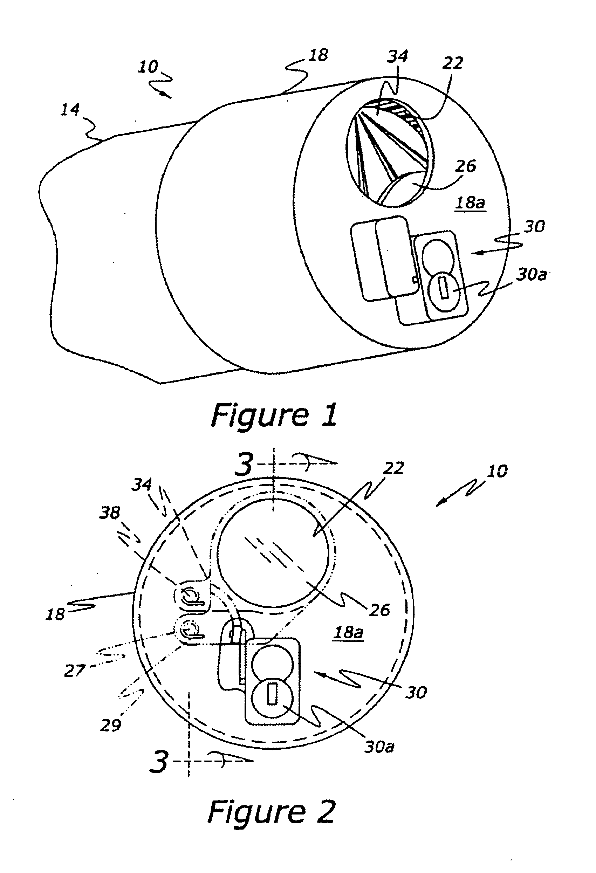

With reference to Figure 1 there is shown a fuel filler closure device 10 adapted for mounting upon a filler pipe 14 connected to a fuel tank (not shown). The filler closure device 10 has a generally cylindrical valve body 18 with a filler passage 22 formed therein. A primary access door 26 is mounted upon pivot 27 (Figure 2) proximate an outermost surface 18a of the valve body 18. The primary access door 26 is biased by a torsion spring 29 into an open position (Figure 1 shows the access door 26 in a partially open position).

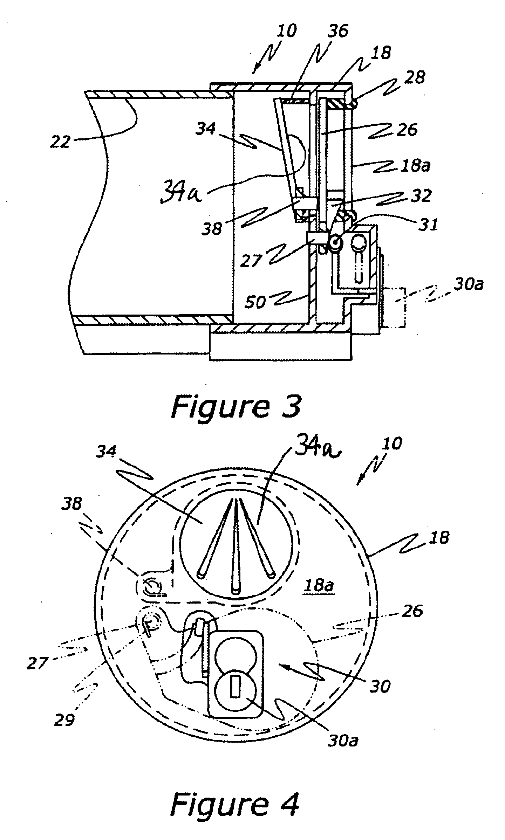

A lock and plunger assembly 30 contains a key cylinder 30a which, when unlocked, allows the lock and plunger assembly 30 to move outwardly when a ramp portion 32 impinges upon a roller 31 (see Figure 3) which is affixed to the lock and plunger assembly 30. Thus, when the lock and plunger assembly 30 is unlocked and moves outwardly, primary access door 26 is allowed to move into an open position as the roller 31 runs along ramp 32.

Primary access door 26 functions not only to prevent access to underlying sealed door 34, but can also performs a sealing function if an annular primary seal 28 is incorporated in outer wall 18a of valve body 18. Primary access door 26 may be either used alone, or in combination with a second sealed door 34, which is shown best in Figures 1, 3, and 4. The sealing door 34 is configured such that insertion of a fuel filler nozzle into closure device 10 causes door 34 to move slideably while rotating upon pivot 38 in the same direction as primary access door 26 moves to allow access.

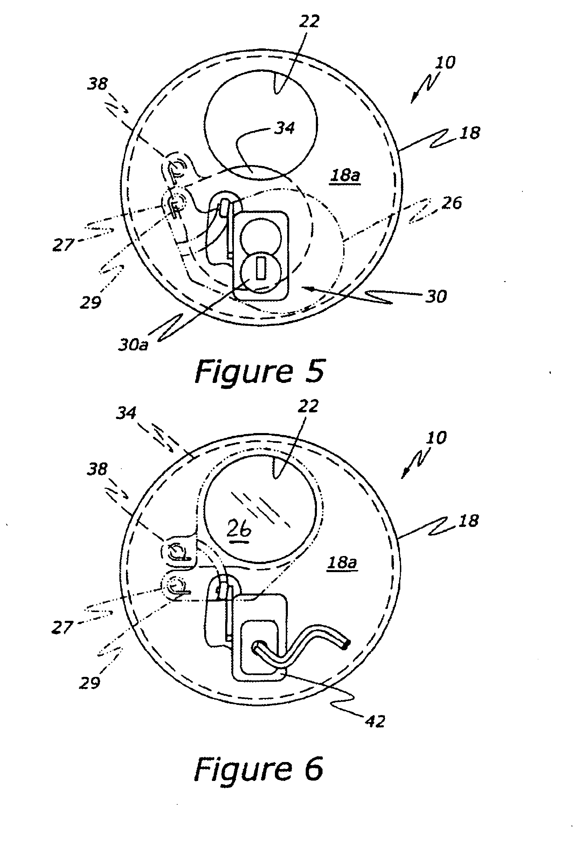

Figure 5 shows both of the doors 26 and 34 in their open positions. In essence, the sealed door 34 has a ramp, 34a (Figures 3 and 4) built into its outermost facing surface which allows the fuel filler nozzle to push sealed door 34 aside as it is inserted into the closure device 10. The door 34 makes sealing contact with an annular seal 36 which is carried by bulkhead 50 (Figure 3). The annular seal 36 serves to cooperate with the sealed door 34 to prevent fuel vapour from leaving closure device 10.

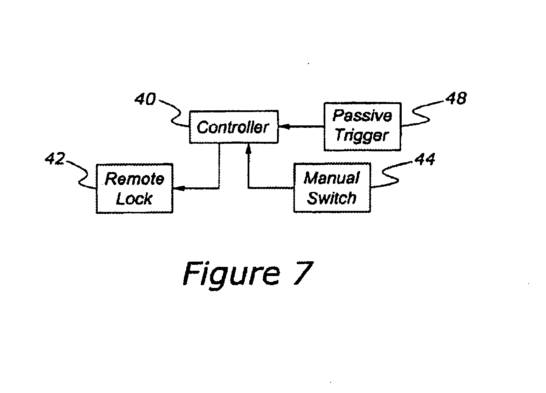

As an alternative to the manual locking device illustrated in Figures 1-5, a remote locking system, shown in Figures 6 and 7, may be employed with the present closure device.

In general, a controller 40 is operable to receive a lock/unlock signal from either a manual switch 44 or passive trigger 48. If a manual switch 44 is employed, a motorist will activate a vehicle condition either by inserting an ignition key or by operating another manual switch, such as one integrated with an electronic key fob, which will cause remote lock 42 to allow a filler nozzle to be inserted into closure device 10.

Those skilled in the art will appreciate in view of this disclosure that remote lock 42 could comprise either an electric solenoid coupled with a push-pull cable or a pneumatic or hydraulic device or yet other types of remotely lockable devices known to those skilled in the art and suggested by this disclosure.

In the event that passive trigger 48 is employed as shown in Figure 7, the passive trigger may be embodied as an electronic device, such as an electronic key fob, using known radio frequency identification technology currently employed within automotive vehicle ignition systems to direct the controller 40 to place remote lock 42 in an unlocked position so as to permit insertion of a fuel filler nozzle into closure device 10. Passive triggering of unlocking could additionally be provided by an electronic device integrated in a robotic or manual refuelling station.

Therefore in summary, the invention provides a fuel filler closure device for an automotive vehicle that includes a valve body adapted for mounting to a fuel filler pipe, with the valve body having a filler passage and an access door mounted within the valve body. The access door has an open position allowing placement of a fuel nozzle within the filler passage, and a closed position blocking insertion of a filler nozzle. A locking mechanism selectively permits the access door to move from the closed position to the open position. The access door may be configured as a primary access door cooperating with a sealing system to prevent fuel vapour and liquid from leaving the filler closure device when the access door is in the closed position; alternatively, the duties of the access door may be limited to controlling physical access to a sealed door underlying the access door.

The locking mechanism for the access door may include either a manually lockable plunger or a pneumatic or electrically lockable remotely controlled plunger which is preferably adapted for locking and unlocking in response to a condition activated by a motorist or passively activated in response to the proximity of an electronic device such as an electronic key fob.

## Claims

1. A fuel filler closure device (10) for an automotive vehicle, comprising a valve body (18) for mounting to a fuel filler pipe connected to a fuel tank, the valve body (18) having a filler passage and an access door (26) mounted within the valve body (18) having an open position allowing placement of a fuel nozzle within the filler passage and a closed position for blocking insertion of a filler nozzle, the fuel filler closure device further comprising a locking mechanism (30) for selectively permitting the access door (26) to move from the closed position to the open position,
**characterised in that**
the device further comprises a normally-closed, sealed door (34) slideably mounted within the valve body (18) in a position underlying the access door for preventing fuel vapour from leaving the filler closure device wherein, when the locking mechanism (30) selectively permits the access door (26) to move from the closed position to the open position, the sealed door (34) is arranged to be opened by the insertion of a fuel filler nozzle thereby permitting filling of the fuel tank.

2. A fuel filler closure device as claimed in Claim 1, wherein the access door (26) is a primary access door cooperating with a sealing system (28) to prevent fuel vapour from leaving the filler closure device when the primary access door (26) is in the closed position.

3. A fuel filler closure device as claimed in Claim 1, wherein the access door (26) is unsealed.

4. A fuel filler closure device as claimed in any of Claims 1 to 3, wherein the locking mechanism (30) includes a lockable plunger.

## Patentansprüche

1. Eine Abschlussvorrichtung zum Kraftstoffeinfüllen (10) für ein Kraftfahrzeug, bestehend aus einem Ventilkörper (18) zwecks Befestigung an einem Kraftstoffeinfüllrohr, das an einen Kraftstofftank angeschlossen ist, wobei der Ventilkörper (18) einen Einfülleinlass und einen Zugangsdeckel (26) aufweist, der im Ventilkörper (18) montiert ist und eine offene Position hat, damit die Kraftstoffdüse in den Einfülleinlass positioniert werden, und eine geschlossene Position hat, damit das Einführen einer Kraftstoffdüse verhindert wird, wobei die Abschlussvorrichtung zum Kraftstoffeinfüllen zudem einen Verschlussmechanismus (30) aufweist, damit die der Zugangsdeckel (26) von der geschlossenen in die offene Position gestellt werden kann,
**dadurch gekennzeichnet, dass**
die Vorrichtung einen normalerweise geschlossenen, abgedichtetem Deckel (34) aufweist, der verschiebbar im Ventilkörper (18) in einer Position unter dem Zugangsdeckel montiert ist und verhindert, dass Kraftstoffdämpfe aus der Abschlussvorrichtung zum Kraftstoffeinfüllen austreten, wenn der Verschlussmechanismus (30) selektiv ermöglicht, dass der Zugangsdeckel (26) von der geschlossenen in die offene Position übergeht, und der abgedichtete Deckel (34) so montiert ist, dass er durch Einführen einer Kraftstoffdüse geöffnet wird, wodurch das Füllen des Kraftstofftanks möglich wird.

2. Eine Abschlussvorrichtung zum Kraftstoffeinfüllen gemäß Anspruch 1, wobei der Zugangsdeckel (26) ein Primärzugangsdeckel ist, der mit dem Abdichtsystem (28) gemeinsam fungiert, um zu verhindern, dass Kraftstoffdämpfe aus der Abschlussvorrichtung zum Kraftstoffeinfüllen austreten, wenn sich der Primärzugangsdeckel (26) in der geschlossenen Position befindet.

3. Eine Abschlussvorrichtung zum Kraftstoffeinfüllen gemäß Anspruch 1, wobei der Zugangsdeckel (26) nicht abgedichtet ist.

4. Eine Abschlussvorrichtung zum Kraftstoffeinfüllen gemäß einem der Ansprüche 1 bis 3, wobei zum Verschlussmechanismus (30) ein verschließbarer Kolben gehört.

## Revendications

1. Dispositif de fermeture (10) de système de remplissage de carburant pour véhicule automobile, constitué d'un corps de vanne (18) destiné à être monté sur un tuyau de remplissage de carburant relié à un réservoir de carburant du véhicule, le corps de vanne (18) comprenant un passage de remplissage et une trappe d'accès (26) montée à l'intérieur du corps de vanne (18), présentant une position ouverte permettant l'insertion de l'embout d'un pistolet distributeur de carburant dans le passage de remplissage et une position fermée interdisant l'insertion de l'embout de pistolet distributeur, le dispositif de fermeture de système de remplissage de carburant comprenant en outre un mécanisme de verrouillage (30) pour permettre à la trappe d'accès (26) d'être déplacée sélectivement de la position fermée à la position ouverte,
**caractérisé en ce que**
le dispositif comprend en outre une trappe d'étanchéité, normalement fermée (34), montée coulissante dans le corps de vanne (18) en position sous-jacente à la trappe d'accès pour empêcher les vapeurs de carburant de sortir du dispositif de fermeture de système de remplissage de carburant, quand le mécanisme de verrouillage (30) permet sélectivement à la trappe d'accès (26) de se déplacer de la position fermée à la position ouverte, la trappe d'étanchéité (34) étant agencée de manière à être ouverte par l'insertion de l'embout d'un pistolet distributeur de carburant, permettant ainsi le remplissage du réservoir de carburant.

2. Dispositif de fermeture de système de remplissage de carburant selon la revendication 1, dont la trappe d'accès (26) est une trappe d'accès primaire coopérant avec un système d'étanchéité (28) pour empêcher les vapeurs de carburant de sortir du dispositif de fermeture de système de remplissage de carburant quand la trappe d'accès primaire (26) est en position fermée.

3. Dispositif de fermeture de système de remplissage de carburant selon la revendication 1, dont la trappe d'accès (26) n'est pas dotée d'un système d'étanchéité.

4. Dispositif de fermeture de système de remplissage de carburant selon l'une quelconque des revendications 1 à 3, dont le mécanisme de verrouillage (30) comprend un plongeur qui peut être verrouillé.
